# EUROPÄISCHE PATENTSCHRIFT

(11) **EP 1 818 524 B1**
(45) Veröffentlichungstag und Bekanntmachung des Hinweises auf die Patenterteilung: **08.01.2014**
(21) Anmeldenummer: 06124473.7
(22) Anmeldetag: 21.11.2006
(51) Int. Cl.: F02D 25/00

(54) **Motorfahrzeug**
Motor vehicle
Véhicule à moteur

(30) Priorität: 13.02.2006 DE 102006006766
(43) Veröffentlichungstag der Anmeldung: 15.08.2007
(73) Patentinhaber: CLAAS Selbstfahrende Erntemaschinen GmbH, 33428 Harsewinkel (DE)
(72) Erfinder: Hugenroth, Ludger, 48346 Ostbevern (DE); Twiefel, Herbert, 33428 Harsewinkel (DE); Isfort, Heinrich, 48249 Dülmen (DE)

(56) Entgegenhaltungen:
- WO-A-2004/074032
- US-A- 4 560 021
- US-A- 5 771 860
- US-A1- 2003 051 477

## Beschreibung

Die Erfindung betrifft ein Motorfahrzeug, siehe z.B. US 4,560,021, mit wenigstens zwei in einem Antriebsstrang betreibbaren Antriebseinheiten nach dem Oberbegriff des Patentanspruchs 1.

Bereits aus der DE 1 780 052 ist für einen landwirtschaftlichen Anwendungsfall ein Motorfahrzeug mit zwei Antriebseinheiten bekannt geworden, wobei jede der beiden Antriebseinheiten derart angeordnet ist, dass sich eine größtmögliche Flächenleistung beim Anbau von Geräten oder Maschinen an dieses Motorfahrzeug erzielen lässt. Zwecks Leistungsausgleich zwischen beiden Antriebseinheiten ist vorgesehen, dass die beiden Antriebseinheiten wahlweise miteinander koppelbar sind sowie unter bestimmten Betriebsverhältnissen die Leistung beider Antriebsmaschinen wahlweise gemeinsam oder getrennt nutzbar ist. Das System kann so ausgestaltet sein, dass jede der Antriebseinheiten einem separaten Antriebsstrang zugeordnet ist, sodass beispielsweise der Fahrantrieb eines Motorfahrzeugs vom Antrieb seiner Arbeitsorgane getrennt mit Energie versorgt werden kann. Dies hat vor allem den Vorteil, dass sich Drehzahlschwankungen in dem einen System nicht unmittelbar auf das andere System auswirken.

Nachteilig ist jedoch bei derartig strukturierten Antriebssystemen, dass die Antriebseinheiten stets in dem Arbeitspunkt betrieben werden, der den Antriebssträngen jeweils die benötigte Antriebsenergie zur Verfügung stellt unabhängig davon, ob die jeweilige Antriebseinheit dann in einem eher günstigen oder eher ungünstigen Betriebspunkt arbeitet.

Der vorliegenden Erfindung liegt daher die Aufgabe zugrunde, die im Stand der Technik beschriebenen Nachteile zu vermeidet, und insbesondere eine Vorrichtung vorzuschlagen, die es ermöglicht, dass die in einen Antriebsstrang integrierten Antriebseinheiten in nahezu optimalen Arbeitspunkten betrieben werden.

Erfindungsgemäß wird die Aufgabe durch ein Motorfahrzeug mit den kennzeichnenden Merkmalen des Patentanspruchs 1 gelöst. Indem die Leistungsabgabe der wenigstens zwei Antriebseinheiten so aufeinander abgestimmt ist, dass die wenigstens zwei Antriebseinheiten im Bereich eines niedrigen Kraftstoffverbrauchs betrieben werden, wird sichergestellt, dass die in einen Antriebsstrang integrierten Antriebseinheiten in nahezu optimalen Arbeitspunkten betrieben werden.

In einer vorteilhaften Ausgestaltung der Erfindung entspricht die Summe der von den Antriebseinheiten aufgebrachten Teilleistungen dem erforderlichen Gesamtleistungsbedarf und wobei die Antriebseinheiten zur Bereitstellung der Teilleistungen in Teillastbereichen nahezu gleichen spezifischen Kraftstoffverbrauchs betrieben werden. Eine solche Ausführung hat insbesondere den Vorteil, dass während des Optimierungsvorganges nur eine einzige Kraftstoffverbrauchskennlinie berücksichtigt werden muss, sodass die erforderliche, in der Regel von verfügbarer Rechenleistung abhängige Optimierung nahezu in Echtzeit erfolgen kann.

Eine besonders kraftstoffsparende Zusammenarbeit der Antriebseinheiten ergibt sich in einer vorteilhaften Ausgestaltung dann, wenn zumindest eine Antriebseinheit im Volllastbereich und die wenigstens eine weitere Antriebseinheit in einem Teillastbereich betrieben wird und die Arbeitspunkte beider Antriebseinheiten auf derselben Kraftstoffverbrauchskennlinie liegen.

Eine nahezu in Echtzeit erfolgende Optimierung der Betriebspunkte der Antriebseinheiten wird in einer vorteilhaften Ausgestaltung dann erreicht, wenn die Mittel zum Betreiben der Antriebseinheiten in Teil- und/oder Volllastbereichen als Steuer- und Regeleinrichtung ausgebildet sind, die in die Motorsteuerung der jeweiligen Antriebseinheit eingreift und diese verändern kann.

Eine kostengünstige und antriebstechnisch einfach umsetzbare Ausführung der erfindungsgemäßen Steuerung der Antriebseinheiten ermöglicht der Betrieb der Antriebseinheiten in den Teil- und/oder Voillastbereichen bei gleicher Motordrehzahl. Dies hat insbesondere den Vorteil, dass keine Getriebestufen zur Synchronisation der verschiedenen Motordrehzahlen vorgesehen werden müssen.

In einer weiteren vorteilhaften Ausgestaltung der Erfindung wird der spezifische Kraftstoffverbrauch der Antriebseinheiten in Kraftstoffverbrauchskennlinien definiert und diese Kraftstoffverbrauchskennlinien sind in der Steuer- und Auswerteinheit abruf- und editierbar hinterlegt. Dies hat vor allem den Vorteil, dass ein schneller Zugriff auf verschiedenste Kraftstoffverbrauchskennlinien und damit eine hochflexible Optimierung des Kraftstoffbedarfs möglich wird.

Eine vorteilhafte Weiterbildung der Erfindung ergibt sich dann, wenn in der Steuer- und Auswerteinheit Kennlinienfelder abruf- und editierbar hinterlegt sind und die Kennlinienfelder zumindest die Motorkennlinien der Antriebseinheiten und diesen zugeordnete Kraftstoffverbrauchskennlinien umfassen. Damit können für jeden beliebigen Leistungsbedarf optimierte Betriebspunkte der Antriebseinheiten ermittelt werden.

Indem die wenigstens zwei Antriebseinheiten die gleiche Struktur aufweisen und auf der gleichen Kennlinie für den spezifischen Kraftstoffbedarf bei gleicher Motordrehzahl betrieben werden und wenigstens eine Antriebseinheit im Volllastbereich arbeitet, wird mit einem Minimum an zu hinterlegenden Kennlinien und ohne zusätzliche Integration von synchronisierenden Übersetzungsstufen die Optimierung des Kraftstoffbedarfs der Antriebseinheiten ermöglicht.

In einer weiteren vorteilhaften Ausgestaltung der Erfindung weisen die wenigstens zwei Antriebseinheiten unterschiedliche Struktur auf und werden auf verschiedenen Kennlinien für den spezifischen Kraftstoffbedarf bei nahezu gleicher Motordrehzahl betrieben, wobei wenigstens eine Antriebseinheit im Volllastbereich arbeitet. Dies hat insbesondere den Vorteil, dass auch Antriebseinheiten mit unterschiedlicher Zylinderanzahl in ein und dasselbe Antriebssystem integrierbar sind und auch in diesem Fall eine Optimierung der Betriebspunkte unter dem Gesichtspunkt eines niedrigen Kraftstoffverbrauchs der Antriebseinheiten ohne Hinzunahme von Übersetzungsstufen möglich wird.

In vorteilhafter Ausgestaltung der Erfindung können die Antriebseinheiten des Motorfahrzeugs in den Teillastbereichen mit unterschiedlicher Drehzahl betrieben werden und wenigsten einer Antriebseinheit eine Getriebestufe zur Drehzahlangleichung zugeordnet sein. Dies ermöglicht eine noch größere Flexibilität der Optimierung des Kraftstoffverbrauchs beim Betrieb der Antriebseinheiten, da in diesem Fall die Optimierung durch den Wegfall der Bedingung gleicher Motordrehzahlen einen weiteren Freiheitsgrad erhält.

Eine vorteilhafte Weiterbildung der Erfindung ergibt sich zudem dann, wenn dem zumindest einem Antriebsstrang eine Vielzahl von Antriebseinheiten zugeordnet sind, für die in erfindungsgemäßer Weise ein optimierter Betriebspunkt ermittelt wird.

Weitere vorteilhafte Ausgestaltungen sind Gegenstand weiterer Unteransprüche und werden nachfolgend anhand eines in mehreren Figuren dargestellten Ausführungsbeispiels näher erläutert. Es zeigen
- Figur 1: ein erfindungsgemäßes Motorfahrzeug in Seitenansicht
- Figur 2: eine schematische Darstellung der erfindungsgemäßen Motorsteuerung
- Figur 3: eine Detaildarstellung verschiedener Motorkennlinienfelder

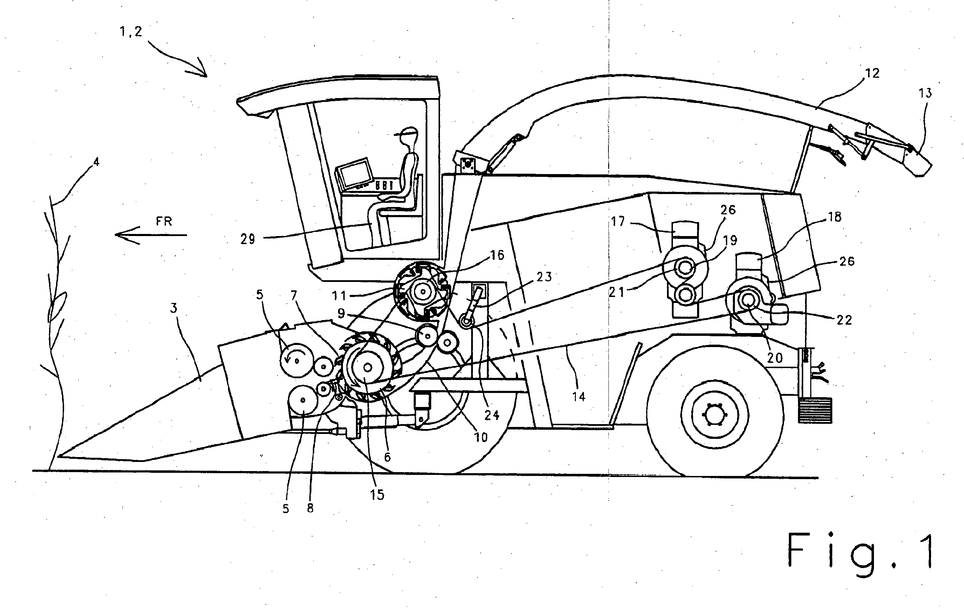

Figur 1 zeigt ein als selbstfahrender Feldhäcksler 1 ausgeführtes landwirtschaftlich nutzbares Motorfahrzeug 2 in Seitenansicht und Schnittdarstellung. Fronseitig in Fahrtrichtung FR gesehen ist dem Feldhäcksler 1 ein Vorsatzgerät 3 zugeordnet, welches im Arbeitsbetrieb des Feldhäckslers 1 das Erntegut 4 aufnimmt, gegebenenfalls zerkleinert und den nachfolgenden Einzugs- und Vorpresswalzen 5 zuführt. Die Einzugs- und Vorpresswalzen 5 leiten das Erntegut 4 der nachgeordneten und rotierenden Häckseltrommel 6 zu, deren umlaufenden Häckselmesser 7 das Erntegut 4 an einer Gegenschneide 8 zerkleinern. Das zerkleinerte Erntegut 4 wird sodann an eine Nachzerkleinerungseinrichtung 9 und von dieser über einen Förderschacht 10 an einen Nachbeschleuniger 11 übergeben. Der Nachbeschleuniger 11 beschleunigt das zerkleinerte Erntegut 4 und fördert es über einen horizontal und vertikal verstellbaren Auswurfkrümmer 12 und eine diesem verschwenkbar zugeordnete Auswurfkrümmerklappe 13 zur Regelung der Wurfweite des Erntegutstrahls auf eine nicht abgebildete, dem Auswurfkrümmer 12 zugeordnete Transportvorrichtung.

Im dargestellten Ausführungsbeispiel sind die Häckseltrommel 6 und der Nachbeschleuniger 11 über einen gemeinsamen Antriebsriemen 14 und diesem zugeordnete Riemenscheiben 15, 16 mit zwei als Dieselmotoren gleicher oder unterschiedlicher Leistungsklasse ausgeführten Antriebseinheiten 17, 18 verbunden. Den Antriebseinheiten 17, 18 sind an sich bekannte und deshalb nicht näher beschriebene Schaltkupplungen 19, 20 zugeordnet, mittels derer die Antriebseinheiten 17, 18 in noch näher zu beschreibender Weise zu- oder abgeschaltet werden können. Im dargestellten Ausführungsbeispiel sind die Schaltkupplungen 19, 20 unmittelbar in die den Antriebseinheiten 17, 18 zugeordneten Riemenscheiben 21, 22 integriert. Zur schlupfarmen Übertragung der Antriebsenergie wird der Antriebsriemen 14 dauerhaft von einer oder mehreren Spanneinrichtung 23 über Spannrollen 24 vorgespannt. Zudem werden in an sich bekannter und deshalb nicht dargestellter Weise das Vorsatzgerät 3, die der Häckseltrommel 6 vorgeordneten Einzugs - und Vorpresswalzen 5 und die Nachzerkleinerungseinrichtung 9 von den Antriebseinheiten 17, 18 angetrieben.

Es liegt im Rahmen der Erfindung, dass die erfindungsgemäßen Antriebseinheiten 17, 18 an einem beliebig ausgeführten Motorfahrzeug 2, wie etwa Lastkraftwagen, Bau- oder Wasserfahrzeugen angeordnet sein können, um in diese integrierte Antriebsstränge mit Antriebsenergie zu versorgen.

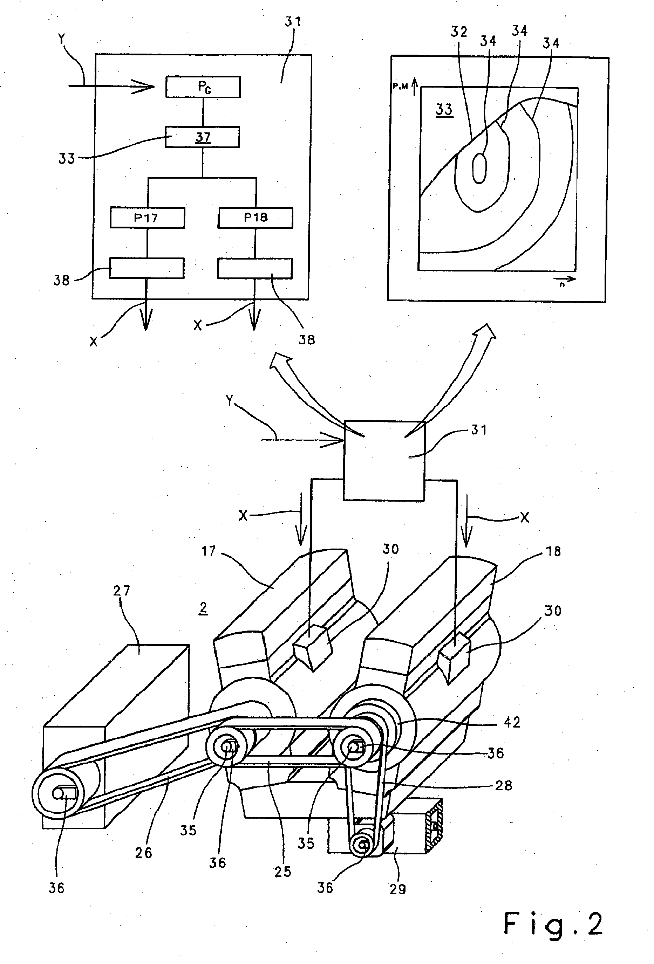

In Fig. 2 wird nun die Erfindung an einer Anordnung von Antriebseinheiten 17, 18 beschrieben, die losgelöst von einem speziellen Typ des Motorfahrzeugs 2 ist. Im dargestellten Ausführungsbeispiel sind die Antriebseinheiten 17, 18 über einen ersten Antriebsstrang 25 miteinander verbunden. Zudem versorgt die eine Antriebseinheit 17 über einen weiteren Antriebsstrang 26 zumindest einen Verbraucher 27 mit Antriebsenergie. Zugleich ist die weitere Antriebseinheit 18 in einen separaten Antriebsstrang 28 integriert der beispielsweise ein Fahrwerk 29 eines Motorfahrzeugs 2 antreiben kann. Erfindungsgemäß sind die Motorsteuerungen 30 der als Verbrennungsmotoren, wie etwa Dieselmotoren, ausgeführten Antriebseinheiten 17, 18 mit einer Steuer- und Auswerteinheit 31 verbunden, die in der Lage ist, durch geeignete Eingangssignale X die Motorsteuerungen 30 zu beeinflussen.

In erfindungsgemäßer Weise sind in der Steuer- und Auswerteinheit 31 an sich bekannte Motorkennlinien 32 hinterlegt, die für eine Antriebseinheit 17, 18 bei einer definierten Drehzahl n die maximal verfügbare Leistung P oder das maximal verfügbare Moment M angibt. Zugleich umfasst das hinterlegte Kennlinienfeld 33 sogenannte Kraftstoffverbrauchskennlinien 34, wobei jede Kraftstoffverbrauchskennlinie 34 jeweils für einen nahezu konstanten Kraftstoffverbrauch die jeweils verfügbare Motorleistung P oder das Motormoment M sowie die dazugehörige Motordrehzahl n editier- und wiederabrufbar angibt. Damit die in der Steuer- und Auswerteinheit 31 hinterlegten Kennlinienfelder 33 flexibel an unterschiedliche Antriebseinheiten 17, 18 anpassbar sind werden die Kennlinienfelder editier- und wiederabrufbar in der Steuer- und Auswerteinheit 31 hinterlegt. Indem nun entweder den Verbrauchern 27, 29 oder den Abtriebswellen 35 der Antriebseinheiten 17, 18 an sich bekannte Drehmomentsensoren 36 zugeordnet sind, können an die Steuer- und Auswerteinheit 31 Drehmomentsignale Y übermittelt werden, aus welchen die Steuer- und Auswerteinheit 31 einen Gesamtleistungsbedarf PG ermittelt, der erforderlich ist, um alle Antriebsstränge 25, 26, 28 die mit den Antriebseinheiten 17, 18 gekoppelt sind mit Antriebsenergie zu versorgen. Dieser Gesamtleistungsbedarf PG wird dann unter Hinzuziehung des in der Steuer- und Auswerteinheit 31 hinterlegten Kennlinienfeldes 33 in noch näher zu beschreibender Weise so auf die einzelnen Antriebseinheiten 17, 18 aufgeteilt, dass jede der Antriebseinheiten in einem Bereich niedrigen Kraftstoffverbrauchs betrieben werden kann. Nachdem der die in dem hinterlegten Kennlinienfeld 33 definierten Zusammenhänge berücksichtigende Programmschritt 37 in der Steuer- und Auswerteinheit 31 abgearbeitet wurde, liegen jeweils optimierte Werte für die von der jeweiligen Antriebseinheit 17, 18 zur Verfügung zu stellende Leistung P17, P18 vor. In einem weiteren Abarbeitungsschritt 38 werden diese optimierten Leistungsdaten P17, P18 in den bereits erwähnten Eingangssignalen X kodiert und an die Motorsteuerungen 30 der Antriebseinheiten 17, 18 übermittelt. In an sich bekannter Weise sind die Motorsteuerungen 30 so strukturiert, dass sie die Kraftstoff- und die Luftzufuhr zu den Antriebseinheiten und sofern die Antriebseinheiten als Ottomotoren ausgebildet sind den Zündzeitpunkt unter Berücksichtigung des abzugebenden Motordrehmoments M oder der Motorleistung P regeln können.

Nachdem die verschiedenen Drehmomentsensoren 36 Drehmomentsignale Y der verschiedenen, von den Antriebseinheiten 17, 18 anzutreibenden Antriebsstränge 25, 26, 28 ermittelt und der Steuer- und Auswerteinheit 31 zugeführt haben, bestimmt diese hieraus einen Gesamtleistungsbedarf PG des Motorfahrzeugs. Da die physikalische Größe Leistung proportional der physikalischen Größe Moment ist, kann hier auch an Stelle des Gesamtleistungsbedarfs das insgesamt von den Antriebseinheiten 17, 18 aufzubringende Gesamtmoment ermittelt werden. Ausgehend von dem ermittelten Gesamtleistungsbedarf oder dem aufzubringenden Gesamtmoment wird in einem ersten, bereits erwähnten Programmschritt 37 unter Berücksichtigung des in der Steuer- und Auswerteinheit 31 hinterlegten Kennlinienfeldes 33 die von den Antriebseinheiten 17, 18 jeweils bereitzustellenden Teilleistungen P17, P18 ermittelt.

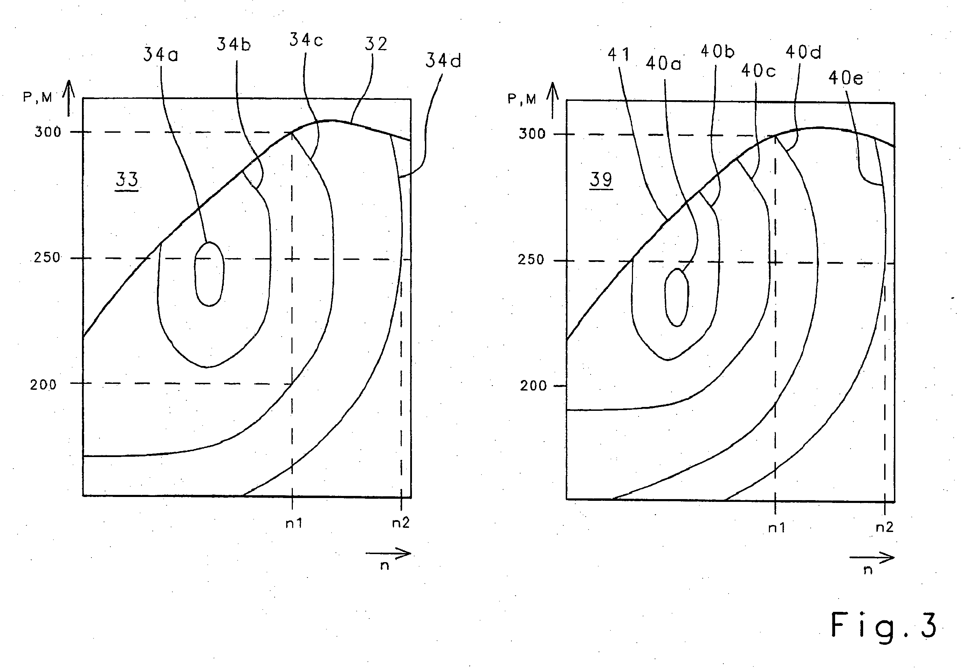

Die Ermittlung dieser Teilleistungen P17, P18 ist schematisch in Figur 3 dargestellt. Die linke Darstellung zeigt die Ermittlung der Teilleistungen P17, P18 für den Fall, dass die wenigstens zwei Antriebseinheiten 17, 18 von identisch oder nahezu identisch strukturierten Motoren, wie etwa zwei Reihensechszylinder-Dieselmotoren gebildet werden. In dem dargestellten Ausführungsbeispiel wird beispielhaft davon ausgegangen, dass der ermittelte Gesamtleistungsbedarf PG = 500 KW betragen soll. Da die Antriebseinheiten 17, 18 in der Regel ohne kostenintensive stufenlose Übersetzungsgetriebe in das gemeinsame Antriebssystem integriert sind, ist eine zwingende Voraussetzung, dass alle integrierten Antriebseinheiten mit der gleichen Motordrehzahl n umlaufen. Gemäß Figur 3, linke Darstellung, würde der erforderliche Gesamtleistungsbedarf von 500 kW nach dem Stand der Technik, auf beide Antriebseinheiten 17, 18 hälftig aufgeteilt, sodass jede Antriebseinheit 17, 18 bei einer Motordrehzahl n2 eine Motorleistung von 250 kW bereitstellt. Damit liegt der Betriebspunkt der Antriebseinheiten 17, 18 auf der Kraftstoffverbrauchskennlinie 34d, wobei der Kraftstoffverbrauch der einzelnen Kraftstoffverbrauchskennlinien 34 mit aufsteigendem Index a-d zunimmt, dass heißt, der niedrigste Kraftstoffverbrauch wird beim Betreiben der Antriebseinheiten 17, 18 auf einer innenliegenderen Kraftstoffverbrauchskennlinie 34 erreicht.

Indem nun erfindungsgemäß die Steuer- und Auswerteinheit 31 unter Berücksichtigung der hinterlegten Kennlinienfelder 33 und unter dem Gesichtspunkt eines niedrigen Kraftstoffverbrauchs die Betriebspunkte der Antriebseinheiten 17, 18 optimiert, ergibt sich eine Aufteilung des Gesamtleistungsbedarfs von PG = 500 kW in der Weise, dass die eine Antriebseinheit 17 eine Antriebsleistung von P17 = 200 kW und die eine weitere Antriebseinheit 18 eine Antriebsleistung von P98 = 300 kW zur Verfügung stellt, wobei die weitere Antriebseinheit 18 ihre Antriebsleistung P 18 im Volllastbetrieb bereitstellt. Dabei arbeiten beide Antriebseinheiten 17, 18 bei einer Motordrehzahl n1 und jeweils in einem Betriebspunkt, der auf der Kraftstoffverbrauchskennlinie 34c liegt. In beiden Fällen stellen die Antriebseinheiten 17, 18 eine Gesamtleistung von 500 kW zur Verfügung, jedoch in dem erfindungsgemäßen Anwendungsfall bei erheblich niedriger Drehzahl n1 der Antriebseinheiten 17, 18, sodass die Betriebspunkte der Antriebseinheiten 17, 18 auch auf einer Kraftstoffverbrauchskennlinie 34c liegen, die einen niedrigeren Verbrauch an Kraftstoff als im Fall der hälftigen Aufteilung des Gesamtleistungsbedarfs auf die einzelnen Antriebseinheiten 17, 18 hervorrufen.

Ein analoges Ergebnis kann nach der Erfindung auch bei Antriebssysteme erzielt werden, deren Antriebseinheiten 17, 18 unterschiedlich strukturiert sind. Dies ist beispielsweise dann der Fall, wenn die eine Antriebseinheit 17 als Sechszylindermotor und die weitere Antriebseinheit 18 als Achtzylindermotor ausgeführt ist. Dann gilt für die erste Antriebseinheit 17 das in Figur 3 linksseitig abgebildete Kennlinienfeld 33 und für die weitere Antriebseinheit 18 das rechtsseitig abgebildete Kennlinienfeld 39. Wegen des in der Regel proportional zur Hubzylinderanzahl steigenden Hubraumes nimmt auch der Kraftstoffbedarf mit steigender Hubzylinderanzahl zu. Dies hat zur Folge, dass zumindest die Kraftstoffverbrauchskennlinien 40a-e der Antriebseinheit 18 mit der größeren Zylinderanzahl zu niedrigeren Motordrehzahlen n verschoben sind, während die Motorkennlinie 41 selbst nahezu gleich der Motorkennlinie 32 der anderen Antriebseinheit 17 sein kann. Beispielhaft wird in Figur 3 wiederum von einem Gesamtleistungsbedarf von PG = 500 kW ausgegangen, der in analoger Weise unter Berücksichtigung des Optimierungskriteriums "niedriger Kraftstoffbedarf" zu von den Antriebseinheiten 17, 18 bereitzustellenden Teilleistungen von P18= 300 kW und P17 = 200 kW bei gleicher Drehzahl n1 führt. Nunmehr arbeitet jedoch die Antriebseinheit 18, da sie die größere Zylinderanzahl aufweist in einem Betriebspunkt, der auf der Kraftstoffverbrauchskennlinie 40d, jedoch wiederum im Volllastbereich liegt, wobei aufsteigende Indizes einen steigenden Kraftstoffbedarf repräsentieren. Im Ergebnis wird jedoch ersichtlich, dass auch in diesem Fall die hälftige Aufteilung des Gesamtleistungsbedarfs von 500 kW für beide Antriebseinheiten 17, 18 zu höheren Kraftstoffverbräuchen führen würde, da die Antriebseinheiten 17, 18 dann in Betriebspunkten arbeiten, die auf den Kraftstoffverbrauchskennlinien 34d und 40e liegen würden, wobei die aufsteigenden Indizes wiederum exemplarisch den zunehmenden Kraftstoffbedarf repräsentieren.

Eine noch größere Flexibilität der Optimierung des Kraftstoffverbrauchs beim Betrieb mehrerer, miteinander gekoppelter Antriebseinheiten 17, 18 im Teil- und/oder Volllastbereich ergibt sich dann, wenn zumindest einer Antriebseinheit 18 gemäß Figur 2 eine Getriebestufe 42 zugeordnet ist, die eine Synchronisation der Abtriebsdrehzahl dieser weiteren Antriebseinheit 18 auf die Abtriebsdrehzahl der ersten Antriebseinheit 17 ermöglicht. Es liegt im Rahmen der Erfindung, dass die Getriebestufe 42 auch als an sich bekanntes Summiergetriebe ausgebildet sein kann, welches die mit unterschiedlichen Drehzahlen von den Antriebseinheiten 17, 18 bereitgestellten Teilleistungen synchronisiert und gegebenenfalls über verschiedene Abtriebe 26, 28 verschiedensten Verbrauchern 27, 29. zuführt.

Zudem liegt es im Rahmen der Erfindung, dass dem Motorfahrzeug eine Vielzahl von Antriebseinheiten 17, 18 zugeordnet sein können, die in erfindungsgemäßer Weise miteinander gekoppelt sind.

### Bezugszeichenliste

- 1: Feldhäcksler
- 2: Motorfahrzeug
- 3: Vorsatzgerät
- 4: Erntegut
- 5: Einzugs- und Vorpresswalzen
- 6: Häckseltrommel
- 7: Häckselmesser
- 8: Gegenschneide
- 9: Nachzerkleinerungseinrichtung
- 10: Förderschacht
- 11: Nachbeschleuniger
- 12: Auswurfkrümmer
- 13: Auswurfkrümmerklappe
- 14: Antriebsriemen
- 15: Riemenscheibe
- 16: Riemenscheibe
- 17: Antriebseinheit
- 18: Antriebseinheit
- 19: Schaltkupplung
- 20: Schaltkupplung
- 21: Riemenscheibe
- 22: Riemenscheibe
- 23: Spanneinrichtung
- 24: Spannrolle
- 25: Antriebsstrang
- 26: Antriebsstrang
- 27: Verbraucher
- 28: Antriebsstrang
- 29: Fahrwerk
- 30: Motorsteuerung
- 31: Steuer- und Auswerteinheit
- 32: Motorkennlinie
- 33: Kennlinienfeld
- 34: Kraftstoffverbrauchskennlinie
- 35: Abtriebswelle
- 36: Drehmomentsensor
- 37: Programmschritt
- 38: Programmschritt
- 39: Kennlinienfeld
- 40: Kraftstoffverbrauchskennlinie
- 41: Motorkennlinie
- 42: Getriebestufe

- FR: Fahrtrichtung
- M: Motormoment
- P: Motorleistung
- PG: Gesamtleistungsbedarf
- P17: Leistung Antriebseinheit
- P18: Leistung Antriebseinheit
- n: Motordrehzahl

- X: Eingangssignal
- Y: Drehmomentsignal

## Patentansprüche

1. Motorfahrzeug (2) mit wenigstens zwei in einem Antriebsstrang (25, 26, 27) betreibbaren Antriebseinheiten (17, 18), wobei den Antriebseinheiten (17, 18) Mittel zugeordnet sind, die eine gleiche oder unterschiedliche Leistungsabgabe der Antriebseinheiten (17, 18) zulassen, wobei die Leistungsabgabe (P17, P18) der wenigstens zwei Antriebseinheiten (17, 18) so aufeinander abgestimmt ist, dass die wenigstens zwei Antriebseinheiten (17, 18) im Bereich eines niedrigen Kraftstoffverbrauchs betrieben werden
**dadurch gekennzeichnet,**
**dass** zumindest eine Antriebseinheit (17, 18) im Volllastbereich und die wenigstens eine weitere Antriebseinheit (17, 18) in einem Teillastbereich betrieben wird, wobei die Antriebseinheiten (17, 18) in den Teil- und/oder Volllastbereichen (P17, P18) bei gleicher Motordrehzahl (n1) betrieben werden.

2. Motorfahrzeug (2) mit wenigstens zwei in einem Antriebsstrang (25, 26, 27) betreibbaren Antriebseinheiten (17, 18) nach Anspruch 1,
**dadurch gekennzeichnet,**
**dass** die Summe der von den Antriebseinheiten (17, 18) aufgebrachten Teilleistungen (P17, P18) dem erforderlichen Gesamtleistungsbedarf (PG) entspricht und wobei die Antriebseinheiten (17, 18) zur Bereitstellung der Teilleistungen (P17, P18) in Arbeitspunkten nahezu gleichen spezifischen Kraftstoffverbrauchs betrieben werden.

3. Motorfahrzeug (2) mit wenigstens zwei in einem Antriebsstrang (25, 26, 27) betreibbaren Antriebseinheiten (17, 18) nach einem der vorhergehenden Ansprüche,
**dadurch gekennzeichnet,**
**dass** die Arbeitspunkte beider Antriebseinheiten (17, 18) auf derselben Kraftstoffverbrauchskennlinie (34c) liegen.

4. Motorfahrzeug (2) mit wenigstens zwei in einem Antriebsstrang (25, 26, 27) betreibbaren Antriebseinheiten (17, 18) nach einem der vorhergehenden Ansprüche,
**dadurch gekennzeichnet,**
**dass** die Mittel zum Betreiben der Antriebseinheiten (17, 18) in Teil- und/oder Volllastbereichen (P17, P18) als Steuer- und Regeleinrichtung (31) ausgebildet sind, die in die Motorsteuerung (30) der jeweiligen Antriebseinheit (17, 18) eingreift und diese verändern kann.

5. Motorfahrzeug (2) mit wenigstens zwei in einem Antriebsstrang(25, 26, 27) betreibbaren Antriebseinheiten (17, 18) nach einem der vorhergehenden Ansprüche,
**dadurch gekennzeichnet,**
**dass** der spezifische Kraftstoffverbrauch der Antriebseinheiten (17, 18) in Kraftstoffverbrauchskennlinien (34a-d, 40a-e) definiert wird und diese Kraftstoffverbrauchskennlinien (34a-d, 40a-e) in der Steuer- und Auswerteinheit (31) abrufund editierbar hinterlegt sind.

6. Motorfahrzeug (2) mit wenigstens zwei in einem Antriebsstrang (25, 26, 27) betreibbaren Antriebseinheiten (17, 18) nach einem der vorhergehenden Ansprüche,
**dadurch gekennzeichnet,**
**dass** in der Steuer- und Auswerteinheit (31) Kennlinienfelder (33, 39) abruf- und editierbar hinterlegt sind und die Kennlinienfelder (33, 39) zumindest die Motorkennlinien (32, 41) der Antriebseinheiten (17, 18) und diesen zugeordneten Kraftstoffverbrauchskennlinien (34a-d, 40a-e) umfassen.

7. Motorfahrzeug (2) mit wenigstens zwei in einem Antriebsstrang (25, 26, 27) betreibbaren Antriebseinheiten (17, 18) nach einem der vorhergehenden Ansprüche,
**dadurch gekennzeichnet,**
**dass** die wenigstens zwei Antriebseinheiten (17, 18) die gleiche Struktur aufweisen und auf der gleichen Kraftstoffverbrauchskennlinie (34a-d) bei nahezu gleicher Motordrehzahl (n1) betrieben werden und wobei zumindest eine Antriebseinheit (17, 18) im Volllastbetrieb arbeitet.

8. Motorfahrzeug (2) mit wenigstens zwei in einem Antriebsstrang (25, 26, 27) betreibbaren Antriebseinheiten (17, 18) nach einem der vorhergehenden Ansprüche,
**dadurch gekennzeichnet,**
**dass** die wenigstens zwei Antriebseinheiten (17, 18) unterschiedliche Struktur aufweisen und auf verschiedenen Kraftstoffverbrauchskennlinien (34a-d, 40a-e) bei nahezu gleicher Motordrehzahl (n1) betrieben werden und wobei zumindest eine Antriebseinheit (17, 18) im Volllastbetrieb arbeitet.

9. Motorfahrzeug (2) mit wenigstens zwei in einem Antriebsstrang (25, 26, 27) betreibbaren Antriebseinheiten (17, 18) nach einem der vorhergehenden Ansprüche,
**dadurch gekennzeichnet,**
**dass** die Antriebseinheiten (17, 18) in den Teillastbereichen mit unterschiedlicher Drehzahl (n1) betrieben werden und wenigsten einer Antriebseinheit (17, 18) eine Getriebestufe (42) zur Drehzahlangleichung zugeordnet ist.

10. Motorfahrzeug (2) mit wenigstens zwei in einem Antriebsstrang (25, 26, 27) betreibbaren Antriebseinheiten (17, 18) nach einem der vorhergehenden Ansprüche,
**dadurch gekennzeichnet,**
**dass** dem zumindest einem Antriebsstrang (25, 26, 28) eine Vielzahl von Antriebseinheiten (17, 18) zugeordnet sind.

## Claims

1. A motor vehicle (2) comprising at least two drive units (17, 18) operable in a drive train (25, 26, 27), wherein associated with the drive units (17, 18) are means which permit an identical or different power output from the drive units (17, 18), wherein the power output (P17, P18) of the at least two drive units (17, 18) is so matched to each other that the at least two drive units (17, 18) are operated in the range of a low fuel consumption,
**characterised in that**
at least one drive unit (17, 18) is operated in the full-load range and the at least one further drive unit (17, 18) is operated in a part-load range, wherein the drive units (17, 18) are operated in the part-load and/or fullload ranges (P17, P18) at the same engine speed (n1).

2. A motor vehicle (2) comprising at least two drive units (17, 18) operable in a drive train (25, 26, 27) according to claim 1, **characterised in that** the sum of the partial power outputs (P17, P18) produced by the drive units (17, 18) corresponds to the required total power output requirement (PG), and wherein the drive units (17, 18) to produce the partial power outputs (P17, P18) are operated at operating points of almost identical specific fuel consumption.

3. A motor vehicle (2) comprising at least two drive units (17, 18) operable in a drive train (25, 26, 27) according to one of the preceding claims **characterised in that** the operating points of both drive units (17, 18) are on the same fuel consumption characteristic curve (34c).

4. A motor vehicle (2) comprising at least two drive units (17, 18) operable in a drive train (25, 26, 27) according to one of the preceding claims **characterised in that** the means for operating the drive units (17, 18) in the part-load and/or full-load ranges (P17, P18) are in the form of control and regulating device (31) which intervene in the engine control (30) of the respective drive unit (17, 18) and can alter same.

5. A motor vehicle (2) comprising at least two drive units (17, 18) operable in a drive train (25, 26, 27) according to one of the preceding claims **characterised in that** the specific fuel consumption of the drive units (17, 18) is defined in fuel consumption characteristic curves (34a-d, 40a-e) and said fuel consumption characteristic curves (34a-d, 40a-e) are stored in the control and evaluation unit (31) in such a way that they can be edited and called up.

6. A motor vehicle (2) comprising at least two drive units (17, 18) operable in a drive train (25, 26, 27) according to one of the preceding claims **characterised in that** characteristic curve families (33, 39) are stored in the control and evaluation unit (31) in such a way that they can be edited and called up and the characteristic curve families (33, 39) include at least the engine characteristic curves (32, 41) of the drive units (17, 18) and fuel consumption characteristic curves (34a-d, 40a-e) associated therewith.

7. A motor vehicle (2) comprising at least two drive units (17, 18) operable in a drive train (25, 26, 27) according to one of the preceding claims **characterised in that** the at least two drive units (17, 18) are of the same structure and are operated on the same fuel consumption characteristic curve (34a-d) at almost the same engine speed (n1) and wherein at least one drive unit (17, 18) operates in the full-load mode.

8. A motor vehicle (2) comprising at least two drive units (17, 18) operable in a drive train (25, 26, 27) according to one of the preceding claims **characterised in that** the at least two drive units (17, 18) are of different structures and are operated on different fuel consumption characteristic curves (34a-d, 40a-e) at almost the same engine speed (n1) and wherein at least one drive unit (17, 18) operates in the full-load mode.

9. A motor vehicle (2) comprising at least two drive units (17, 18) operable in a drive train (25, 26, 27) according to one of the preceding claims **characterised in that** the drive units (17, 18) are operated in the part-load ranges at differing speeds (n1) and a transmission stage (42) for rotary speed adaptation is associated with at least one drive unit (17, 18).

10. A motor vehicle (2) comprising at least two drive units (17, 18) operable in a drive train (25, 26, 27) according to one of the preceding claims **characterised in that** a number of drive units (17, 18) are associated with the at least one drive train (25, 26, 28).

## Revendications

1. Véhicule à moteur (2) comprenant au moins deux unités d'entraînement (17, 18) pouvant être actionnées dans une transmission (25, 26, 27), dans lequel des moyens sont associés aux unités d'entraînement (17, 18), qui permettent une libération de puissance identique ou différente des unités d'entraînement (17, 18), dans lequel la libération de puissance (P17, P18) des au moins deux unités d'entraînement (17, 18) est accordée de sorte que les au moins deux unités d'entraînement (17, 18) sont actionnées dans la plage d'une faible consommation de carburant,
**caractérisé en ce**
**qu'**au moins une unité d'entraînement (17, 18) est actionnée à pleine charge et l'au moins une autre unité d'entraînement (17, 18) est actionnée en charge partielle, dans lequel les unités d'entraînement (17, 18) sont actionnées en charge partielle et/ou à pleine charge (P17, P18) avec le même régime moteur (n1).

2. Véhicule à moteur (2) comprenant au moins deux unités d'entraînement (17, 18) pouvant être actionnées dans une transmission (25, 26, 27) selon la revendication 1,
**caractérisé en ce**
**que** la somme des puissances partielles (P17, P18) appliquées par les unités d'entraînement (17, 18) correspond au besoin en puissance global (PG) nécessaire et dans lequel les unités d'entraînement (17, 18) sont actionnées pour fournir les puissances partielles (P17, P18) dans des points de fonctionnement ayant presque la même consommation de carburant spécifique.

3. Véhicule à moteur (2) comprenant au moins deux unités d'entraînement (17, 18) pouvant être actionnées dans une transmission (25, 26, 27) selon l'une des revendications précédentes,
**caractérisé en ce**
**que** les points de fonctionnement des deux unités d'entraînement (17, 18) se situent sur la même caractéristique de consommation de carburant (34c).

4. Véhicule à moteur (2) comprenant au moins deux unités d'entraînement (17, 18) pouvant être actionnées dans une transmission (25, 26, 27) selon l'une des revendications précédentes,
**caractérisé en ce**
**que** les moyens d'actionnement des unités d'entraînement (17, 18) en charge partielle et/ou à pleine charge (P17, P18) sont configurés en tant que dispositif de commande et de réglage (31), qui s'insère dans la distribution (30) de l'unité d'entraînement (17, 18) respective et qui peut la modifier.

5. Véhicule à moteur (2) comprenant au moins deux unités d'entraînement (17, 18) pouvant être actionnées dans une transmission (25, 26, 27) selon l'une des revendications précédentes,
**caractérisé en ce**
**que** la consommation de carburant spécifique des unités d'entraînement (17, 18) est définie dans des caractéristiques de consommation de carburant (34a-d, 40a-e) et ces caractéristiques de consommation de carburant (34a-d, 40a-e) peuvent être enregistrées dans l'unité de commande et d'évaluation (31) pour être appelées et éditées.

6. Véhicule à moteur (2) comprenant au moins deux unités d'entraînement (17, 18) pouvant être actionnées dans une transmission (25, 26, 27) selon l'une des revendications précédentes,
**caractérisé en ce**
**que** dans l'unité de commande et d'évaluation (31) sont enregistrés des champs de caractéristiques (33, 39) pour être appelés et édités et les champs de caractéristiques (33, 39) comprennent au moins les caractéristiques motrices (32, 41) des unités d'entraînement (17, 18) et les caractéristiques de consommation de carburant (34a-d, 40a-e) qui leur sont associées.

7. Véhicule à moteur (2) comprenant au moins deux unités d'entraînement (17, 18) pouvant être actionnées dans une transmission (25, 26, 27) selon l'une des revendications précédentes,
**caractérisé en ce**
**que** les au moins deux unités d'entraînement (17, 18) présentent la même structure et sont actionnées sur la même caractéristique de consommation de carburant (34a-d) lorsque le régime moteur (n1) est presque le même et dans lequel une au moins une unité d'entraînement (17, 18) fonctionne à pleine charge.

8. Véhicule à moteur (2) comprenant au moins deux unités d'entraînement (17, 18) pouvant être actionnées dans une transmission (25, 26, 27) selon l'une des revendications précédentes,
**caractérisé en ce**
**que** les au moins deux unités d'entraînement (17, 18) présentent une structure différente et sont actionnées sur des caractéristiques de consommation de carburant (34a-d, 40a-e) différentes lorsque le régime moteur (n1) est presque le même et dans lequel au moins une unité d'entraînement (17, 18) fonctionne à pleine charge.

9. Véhicule à moteur (2) comprenant au moins deux unités d'entraînement (17, 18) pouvant être actionnées dans une transmission (25, 26, 27) selon l'une des revendications précédentes,
**caractérisé en ce**
**que** les unités d'entraînement (17, 18) sont actionnées dans les plages de charge partielle avec un régime moteur (n1) différent et au moins un rapport de changement de vitesse (42) est associé à une unité d'entraînement (17, 18) pour un alignement du régime.

10. Véhicule à moteur (2) comprenant au moins deux unités d'entraînement (17, 18) pouvant être actionnées dans une transmission (25, 26, 27) selon l'une des revendications précédentes,
**caractérisé en ce**
**qu'**une pluralité d'unités d'entraînement (17, 18) sont associées à au moins une transmission (25, 26, 28).
